# EUROPÄISCHE PATENTSCHRIFT

(11) **EP 2 222 760 B1**
(45) Veröffentlichungstag und Bekanntmachung des Hinweises auf die Patenterteilung: **03.04.2013**
(21) Anmeldenummer: 08865468.6
(22) Anmeldetag: 15.12.2008
(51) Int. Cl.: C09K 9/02, G03C 1/00, C08J 5/18

(54) **Verwendung von Dotierkapseln für den Sonnenschutz und die Wärmereflexion**
Use of doping capsules for solar protection and heat reflection
Utilisation de capsules de dopage pour la protection solaire et le rejet de la chaleur

(30) Priorität: 20.12.2007 DE 102007061513
(43) Veröffentlichungstag der Anmeldung: 01.09.2010
(73) Patentinhaber: Fraunhofer-Gesellschaft zur Förderung der angewandten Forschung e.V., 80686 München (DE)
(72) Erfinder: SEEBOTH, Arno, 12557 Berlin (DE); MÜHLING, Olaf, 10711 Berlin (DE); RUHMANN, Ralf, 12685 Berlin (DE)
(74) Vertreter: Pfenning, Meinig & Partner GbR
(86) Internationale Anmeldenummer: PCT/EP2008/010633
(87) Internationale Veröffentlichungsnummer: WO 2009/080232

(56) Entgegenhaltungen:
- EP-A- 1 258 504
- WO-A-99/64488
- DE-A1- 19 642 886
- LOXLEY ANDREW, VINCENT BRIAN: "Preparation of Poly(methylmethacrylate) Microcapsules with Liquid Cores", JOURNAL OF COLLOID AND INTERFACE SCIENCE, vol. 208, no. 1, 1 December 1998 (1998-12-01), pages 49-62, DOI: doi:10.1006/jcis.1998.5698

## Beschreibung

Die Erfindung betrifft die Verwendung von Dotierkapseln, die eine Substanz aufweisen, die in einem definierten Temperaturbereich durch physikochemische Wechselwirkungen mit der zu dotierenden Polymermatrix eine abnehmende Transparenz bei steigender Temperatur zeigt. Beschrieten werden Verbundsysteme, die eine mit den Dotierkapseln dotierte Polymermatrix aufweisen. Erfindungsgemäße verwendung finden die Kapseln für den Sonnenschutz bzw. die Wärmereflexion.

Der jährliche Energieverbrauch in Gebäuden für die Kühlung übersteigt weltweit schon beinahe den adäquaten Energieverbrauch für deren Heizung. Eine Optimierung der Energiebilanz ist erforderlich, um zunehmenden thermischen Stress in den Städten zu vermeiden. Dementsprechend müssen Gebäude so geplant werden, dass eine passive Kühlung erfolgt, anstatt sie mit elektrischen Klimaanlagen auszustatten.

Der Schutz vor Überhitzung erfolgt nach wie vor beinahe ausschließlich über die konventionelle mechanische Verschattung.

Neuere Methoden, wie aktives Schalten (vor allem mittels Elektrochromie) haben sich bislang nicht durchgesetzt. Neben ökonomischen Aspekten sind hierfür ganz sicher auch noch ungelöste technologische Fragen verantwortlich. In Encyclopedia of Polymer Sciences and Technology wird von A. Seeboth/D. Lötzsch (2004) die Nutzung thermochromer Materialien für temperaturgesteuerte optische Effekte im Einzelnen beschrieben.

Seit Jahrzehnten wird versucht, thermotrope Hydrogele oder Polymerblends für den Sonnenschutz zu verwenden. Bereits zwischen 1950 und 1960 wurde im Zoo München mit thermotropen Materialien für den Sonnenschutz experimentiert. Weitere temperaturabhängig schaltende thermotrope Materialien oder permanent sonnenstrahlreflektierende Schichten auf dem Gebiet des Sonnenschutzes sind aus US 4,307,942, US 6,440,592 und US 2005/147825 bekannt.

Neben bislang ungelösten technologischen Fragestellungen sind sicherlich auch bis in die Gegenwart noch nicht verstandene Reaktionsmechanismen in den eingesetzten thermotropen Systemen, u.a. chemische Konkurrenzreaktionen, Phasenseparationen, Phasenübergänge, ein wesentlicher Grund für die Hinderung einer breiten Markteinführung. So wird beispielsweise in EP 0 125 804 als thermotrope Monomere eine aliphatische Verbindung der allgemeinen Formel CnHn+2 mit n = 5 bis 30 in einer Konzentration zwischen 0,5 und 10 Gew.-% in ein photohärtendes Matrixpolymer eingebracht. Strukturen dieser allgemeinen Formel sind allerdings nicht in der Lage, als Monomere in einer Polymerreaktion zu fungieren. Monomere oder monomere Verbindungen sind per Definition niedermolekulare, reaktionsfähige Moleküle, die sich zu molekularen Ketten oder Netzen, zu unverzweigten oder verzweigten Polymeren zusammenschließen können. Darüber hinaus ist ein Migrationsprozess der homogen verteilten aliphatischen Verbindung in der Polymermatrix an die Substratoberfläche, insbesondere noch gefördert durch thermische Belastung, zwangsläufig. Die thermotropen Eigenschaften, basierend auf der Notwendigkeit einer anisotropen Phase, erzeugt in einem Konzentrationsbereich bis zu 10 Gew.-% besitzen keine Langzeitstabilität. Es wird in EP 0 125 804 weiter beschrieben, dass das Gemisch eine entsprechende Löslichkeit für die thermotrope Komponente aufweisen muss, um eine Fällungsreaktion zu ermöglichen. Das Lösen der thermotropen Phase führt zwangsläufig zum Verlust der Anisotropie, die auf intermolekulare Wechselwirkungen der einzelnen thermotropen Moleküle untereinander beruht. Bei der anschließenden Vernetzung kann kinetisch und thermodynamisch bedingt die thermotrope Komponente nicht wieder quantitativ als separate Phase gefällt werden. Weiterhin lassen eine Aushärtung der Polymermatrix durch Belichtung unter einer Inertatmosphäre oder die Herstellung der Folien durch Gießen zwischen zwei Glasplatten und deren spätere Entfernung keine kontinuierliche und kostendeckende Technologie zu. Diese Lösungsstrategie ist daher nicht marktfähig.

Der Erfindung liegt daher, ausgehend von den beschriebenen Nachteilen des Standes der Technik, die Aufgabe zugrunde, einen langzeitstabilen, d.h. thermodynamisch stabilen, thermotropen Kunststoff bereitzustellen, der sich u.a. für den Sonnenschutz einsetzen lässt.

Diese Aufgabe wird durch die Verwendung von Dotierkapseln mit den Merkmalen des Anspruchs 1 gelöst. Die weiteren abhängigen Ansprüche zeigen vorteilhafte Weiterbildungen auf.

Es werden Dotierkapseln enthaltend mindestens eine Substanz, die in einem Temperaturbereich von 10 bis 55 °C eine Rotator-Phase aufweist, bereitgestellt. Die Kapseln zeigen dabei in dem genannten Temperaturbereich bei steigender Temperatur eine Abnahme der Transparenz.

Unter Transparenz ist im Rahmen der vorliegenden Erfindung zu verstehen, dass ein Material dann transparente Eigenschaften besitzt, wenn es im Wellenlängenbereich von UV-Vis, NIR oder IR eine Transmission von mindestens 30 %, bevorzugt mindestens 50 % und besonders bevorzugt mindestens 70 % aufweist.

Die Rotator-Phase führt in Abhängigkeit von der Temperatur zu unterschiedlich geordneten und isotropen Phasen des Kernmaterials. Als Rotator-Phase wird die plastische kristalline Phase bezeichnet, die sich zwischen hochgeordneten kristallinen Phasen und der vollständig ausgebildeten isotropen Phase bildet. Bezüglich der Rotator-Phase wird auf Sirota, Singer, J. Chem. Phys. 101 (1994), 10873 verwiesen.

Die temperaturinduzierten Strukturänderungen der Substanz mit der Rotator-Phase finden zwischen dem Übergang vom Zustand fest/fest zu fest/flüssig statt.

Diese können mittels dynamischer Differenz-Kalorimetrie (engl. Differential Scanning Calorimetry, DSC) und Röntgen-Analytik sehr genau charakterisiert werden. Durch physikochemische Wechselwirkung zwischen der Substanz in der Kapsel und einer zu dotierenden Polymermatrix erfolgt mit Variation der Temperatur eine temperaturabhängige Änderung des Brechungsindex. Im Resultat geht erfindungsgemäß mit Temperaturerhöhung gleichzeitig eine Erniedrigung der Transparenz einher, was einen wesentlichen Unterschied und Vorteil gegenüber den aus dem Stand der Technik bekannten Systemen darstellt. Dieser Effekt kann u.a. für den Sonnenschutz genutzt werden. Voraussetzung ist dabei, dass die Substanz mit der Rotator-Phase als separate Phase vorliegt. Diese muss in der räumlichen Größe möglichst gering sein, um den optischen Anforderungen zu genügen und möglichst in monodisperser Form vorliegen, um den mechanischen Eigenschaften des resultierenden thermotropen Gesamtsystems Rechnung zu tragen.

Vorzugsweise ist die mindestens eine Substanz mit einer Rotator-Phase ausgewählt aus der Gruppe der gesättigten und ungesättigten Kohlenwasserstoffe. Hierbei sind Substanzen aus der folgenden Gruppe besonders bevorzugt:
- gesättigte oder ungesättigte aliphatische Kohlenwasserstoffen (C₁₀-C₃₀), insbesondere n-Tetradecan, n-Eicosan, n-Nonadecan, n-Heptacosan oder Hexadecan,
- gesättigte oder ungesättigte Fettalkohole und Fettamine, insbesondere Dodecylalkohol, Decylalkohol, Hexadecylalkohol, Dodecylamin, Decylamin oder Hexadecylamin,
- Ester von Fettsäuren und halogenierte Kohlenwasserstoffe, insbesondere C₁₄-C₂₆-Fettsäureester, C₁₄-C₂₆-Kohlenwasserstoffe oder Perfluoralkane,
- Cholesterylverbindungen, insbesondere Cholesterolmonohydrat, Cholesterylacetat oder Stigmasterol,
- Polyolefine, insbesondere Polyethylen, Polyproylen oder deren Copolymere,
- Organometalle, insbesondere Octamethyl-Ferrocene,
- sowie Mischungen hiervon.

Der Einsatz der Substanz mit Rotator-Phase kann als Einzelsubstanz oder als Gemisch von mehreren Substanzen in einer Kapsel erfolgen.

Die Dotierkapsel kann ebenfalls Substanzen, die keine Rotator-Phase aufweisen, enthalten. Hierzu eignen sich besonders grenzflächenaktive Stoffe, wie nichtionische Ethylenoxid-Derivate, die die Wechselwirkung zwischen den Substanzen mit Rotator-Phase durch Ausbildung eines thermodynamisch stabilen Komplexes erhöhen können. Insbesondere bei der Verwendung von Paraffin als Substanz mit Rotator-Phase lassen sich vorzugsweise anionische oder kationische grenzflächenaktive Stoffe, wie Natriumdodecylsulfat (SDS) oder Cetyltrimethylammoniumbromid (CTAB) als Zusatzstoffe verwenden. Die Möglichkeit der Ausbildung von Rotator-Phasen durch die Komplexbildung von Substanzen mit Rotator-Phasen und Substanzen ohne Rotator-Phasen ist nicht ausgeschlossen und kann als Effekt genutzt werden.

Vorzugsweise sind die Kapseln Mikrokapseln und weisen einen Durchmesser im Bereich von 1 bis 10 µm auf. Die Kapseln können aber auch als Nanokapseln hergestellt werden und weisen dabei vorzugsweise einen Durchmesser im Bereich von 10 nm bis 1 µm auf. Einzige Bedingung ist hier, dass die Nanokapseln einen Durchmesser oberhalb von λ/4 aufweisen. Bei geringen Ansprüchen an die optische Qualität, z.B. wenn keine hohen Anforderungen an das homogene Aussehen gestellt sind, können die Kapseln auch einen Durchmesser von mehr als 10 µm aufweisen.

Bei der Anwendung für den Sonnenschutz können auch Mischungen von Kapseln mit unterschiedlichen Substanzen mit Rotator-Phase oder auch Kapseln unterschiedlicher Größe zum Einsatz gelangen. Hierdurch lässt sich der Arbeitsbereich nahezu beliebig variieren.

Die Kapseln lassen sich gemäß der Vorschrift von A. Loxley and B. Vincent, Journal of Colloid and Interface Science 208, 49-62 (1998), herstellen. Die Separation der Kapseln erfolgt durch Filtrieren oder Sprühtrocknen.

Die spezifische Technik und die Bedingungen in der Startemulsion sind verantwortlich für die Kapselgröße. Diese kann oberhalb oder unterhalb 1 µm liegen, also im mikro- oder nano-Bereich.

Die Schalttemperatur zwischen dem transparenten und opaken Zustand für das kapseldotierte Polymermaterial, d.h. das Verbundsystem wird durch die jeweilige verwendete Substanz mit Rotator-Phase oder deren Gemisch bestimmt. Hierdurch ergibt sich eine ausgesprochene Vielfältigkeit. Für Nanokapseln (unterhalb 1 µm) ergeben sich durch den Einsatz unterschiedlicher Dropletgrößen bei konstanter Rotator-Substanz noch zusätzliche Variationsmöglichkeiten zur Einflussnahme auf den Schaltpunkt. So kann ein Gemisch von Kapseln mit konstanter Rotator-Substanz C20 verwendet werden, wobei die Kapselgröße ca. 130 nm oder ca. 300 nm beträgt. Natürlich können Mikro- und Nanokapseln ebenfalls als Gemisch verwendet werden, wobei die Rotator-Substanz konstant oder unterschiedlich sein kann, bestehend aus jeweils einer Einzelkomponente oder aus einem Gemisch.

Die Dotierkapseln lassen sich mit unterschiedlichen Rührtechniken (Flügelrührer, Dissolver, Turrax) in die monomeren Ausgangsverbindungen für Gießharzsysteme oder für Duromere eintragen. Die Konzentration in Gew.-% liegt zwischen 0,1 und 8,5 Gew.-%, insbesondere zwischen 0,5 und 2,5 Gew.-%. Werden die Kapseln als Pulver oder vorgefertigtes Batch von thermoplastischen Polymerwerkstoffen in einem Extrusionsprozess zugeführt, sollte hier die Konzentration zwischen 0,5 und 7,5 Gew.-% betragen. Bei Extrusionsprozessen sind Melaminharz- und vernetzte Polymethacrylatkapseln, vorzugsweise für Polyolefine, zu verwenden. Epoxidharzkapseln werden bevorzugt in höherschmelzende Polymere, wie PC, PS oder PMMA dotiert.

Es werden ebenso Verbundsysteme bereitgestellt, die mindestens eine Polymermatrix sowie die zuvor beschriebenen Kapseln enthalten. Als Polymermatrix kommen dabei bevorzugt Thermoplasten, Duromeren, Elastomeren, Gießharze, Lacke, Hydrogele, anorganische Polymere und Mischungen hiervon in Frage. Hierbei ist wesentlich, dass die genannten Polymermatrizes in einem definierten Temperatur- oder Druckbereich zumindest einen transparenten Zustand aufweisen.

Als Thermoplasten sind in besonderer Weise Polyolefine, Polycarbonate, Polymethacrylate, Polyamide, deren Blends, Copolymere und Polymerlegierungen geeignet. Melaminharze und Epoxidharze sind bevorzugte Duromere und organische Siliziumderivate für Lacke. Elastomere sollten vorzugsweise mittels Schwefel vernetzt sein. Neben der Auswahl der Kunststoffklasse ist auch deren technologische Verarbeitung für die makroskopischen Eigenschaften entscheidend.

Erfindungsgemäße Verwendung finden die Dotierkapseln im Bereich des Sonnenschutzes und der Wärmereflexion.

Anhand des nachfolgenden Beispiels sowie der dazugehörigen Figur soll die erfindungsgemäße Verwendung näher erläutert werden.

### Beispiel 1

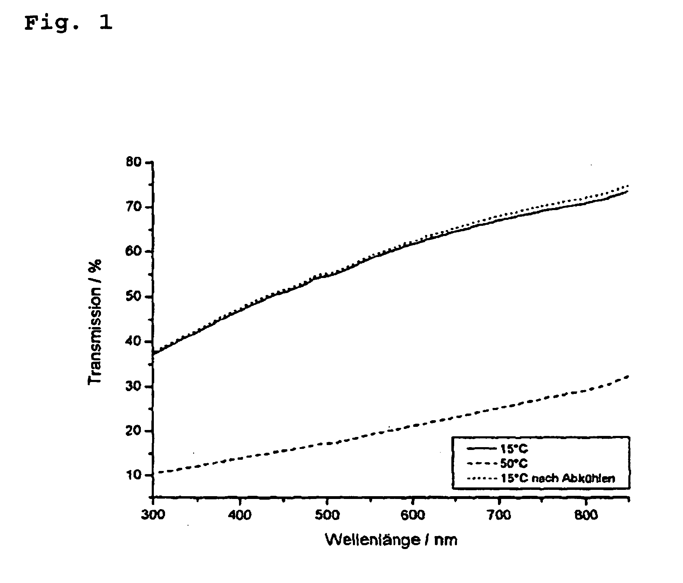

3,5 Gew.-% einer Mikrokapsel mit einer Kapselgröße von 3 bis 6 µm werden in Polyethylen des Types LD beigemischt. In einem Extrusionsverfahren wird eine thermotrope Folie mit einer Schichtdicke von ca. 110 µm hergestellt. Die Heizzonen des Extruders sind zwischen 180 °C und 205 °C geschaltet; an der Breitschlitzdüse beträgt die Temperatur 210 °C. Die Folie wird an der Chill-Rolle auf 45 °C innerhalb von 2 bis 5 Sekunden abgekühlt. Die extrudierte thermotrope Folie erhöht ihre Transparenz mit Temperaturerhöhung (Fig. 1). Der Prozess ist reversibel. Die Folie ist geeignet für den Sonnenschutz.

## Patentansprüche

1. Verwendung von Dotierkapseln enthaltend mindestens eine Substanz, die in einem Temperaturbereich von 10 bis 55 °C eine Rotator-Phase aufweist und als separate Phase vorliegt und die Substanz ausgewählt ist aus der Gruppe bestehend aus
• gesättigten oder ungesättigten Fettalkoholen und Fettaminen, insbesondere Dodecylalkohol, Decylalkohol, Hexadecylalkohol, Dodecylamin, Decylamin oder Hexadecylamin,
• Estern von Fettsäuren und halogenierten Kohlenwasserstoffen, insbesondere C₁₄-C₂₆-Fettsäureestern, C₁₄-C₂₆-Kohlenwasserstoffen oder Perfluoralkanen,
• Cholesterylverbindungen, insbesondere Cholesterolmonohydrat, Cholesterylacetat oder Stigmasterol,
• Polyolefinen, insbesondere Polyethylen, Polyproylen oder deren Copolymeren,
• Organometallen, insbesondere Octamethyl-Ferrocenen,
• sowie Mischungen hiervon,
für den Sonnenschutz und die Wärmereflexion, wobei die Kapseln geeignet sind für eine Polymermatrix bestehend aus Thermoplasten, Duromeren, Elastomeren, Gießharzen, Lacken, Hydrogelen, anorganischen Polymeren und Mischungen hiervon, einen Durchmesser von oberhalb von λ/4 im Wellenlängenbereich von UV-VIS, NIR oder IR aufweisen und die Kapseln
a) Mikrokapseln sind und einen Durchmesser im Bereich von 1 bis 10 µm aufweisen;
b) Nanokapseln sind und einen Durchmesser im Bereich von 10 nm bis 1 µm aufweisen; oder
c) aus einem Gemisch aus Mikrokapseln mit einem Durchmesser im Bereich von 1 bis 10 µm und Nanokapseln mit einem Durchmesser im Bereich von 10 nm bis 1 µm bestehen; und
die Kapseln in dem Temperaturbereich bei steigender Temperatur eine Abnahme der Transparenz zeigen.

2. Verwendung der Dotierkapseln nach Anspruch 1,
**dadurch gekennzeichnet, dass** die mindestens eine Substanz im Temperaturbereich von 15 bis 45 °C eine Rotator-Phase aufweist.

3. Verwendung der Dotierkapseln nach einem der Ansprüche 1 oder 2,
**dadurch gekennzeichnet, dass** die mindestens eine Substanz in monodisperser Form vorliegt.

4. Verwendung der Dotierkapseln nach einem der Ansprüche 1 bis 3,
**dadurch gekennzeichnet, dass** die Kapsel zusätzlich Substanzen ohne Rotator-Phase enthält.

5. Verwendung der Dotierkapseln nach einem der Ansprüche 1 bis 4,
**dadurch gekennzeichnet, dass** die Thermoplasten ausgewählt sind aus der Gruppe bestehend aus Polyolefinen, Polycarbonaten, Polymethacrylaten, Polyamiden, deren Blends, Copolymeren und Polymerlegierungen.

6. Verwendung der Dotierkapseln nach Anspruch 5,
**dadurch gekennzeichnet, dass** die Duromere ausgewählt sind aus der Gruppe der Melaminharze und Epoxidharze.

7. Verwendung der Dotierkapseln nach einem der Ansprüche 1 bis 6,
**dadurch gekennzeichnet, dass** die Lacke ausgewählt sind aus organischen Siliziumverbindungen.

8. Verwendung der Dotierkapseln nach einem der Ansprüche 1 bis 7,
**dadurch gekennzeichnet, dass** die Elastomere mittels Schwefel vernetzt sind.

## Claims

1. Use of doping capsules comprising at least one substance which has a rotator phase in a temperature range of 10 to 55 °C and is present as separate phase and the substance is selected from the group consisting of
• saturated or unsaturated fatty alcohols and fatty amines, in particular dodecyl alcohol, decyl alcohol, hexadecyl alcohol, dodecylamine, decylamine or hexadecylamine,
• esters of fatty acids and halogenated hydrocarbons, in particular C₁₄-C₂₆ fatty acid esters, C₁₄-C₂₆ hydrocarbons or perfluoroalkanes,
• cholesteryl compounds, in particular cholesterol monohydrate, cholesteryl acetate or stigmasterol,
• polyolefins, in particular polyethylene, polypropylene or copolymers thereof,
• organometals, in particular octamethyl ferrocenes,
• and also mixtures hereof,
for sun protection and/or heat reflection, wherein capsules are suited for a polymer matrix consisting of thermoplastics, duromers, elastomers, cast resins, lacquers, hydrogels, inorganic polymers, and mixtures hereof, have a diameter of above λ/4 in the wavelength range of UV-VIS, NIR or IR and the capsules
a) are microcapsules and have a diameter in the range of 1 to 10 µm;
b) are nanocapsules and have a diameter in the range of 10 nm to 1 µm; or
c) consist of a mixture of microcapsules with a diameter in the range of 1 to 10 µm and nanocapsules with a diameter in the range of 10 nm to 1 µm; und
the capsules displaying a decrease in transparency in the temperature range with increasing temperature.

2. Use of the doping capsules according to claim 1, **characterised in that** the at least one substance has a rotator phase in the temperature range of 15 to 45°C.

3. Use of the doping capsules according to one of the claims 1 or 2, **characterised in that** the at least one substance is present in monodisperse form.

4. Use of the doping capsules according to one of the claims 1 to 3, **characterised in that** the capsule comprises in addition substances without a rotator phase.

5. Use of the doping capsules according to claim 1 to 4, **characterised in that** the thermoplastics are selected from the group consisting of polyolefins, polycarbonates, polymethacrylates, polyamides and blends, copolymers and polymer alloys thereof.

6. Use of the doping capsules according to claim 5, **characterised in that** the duromers are selected from the group of melamine resins and epoxy resins.

7. Use of the doping capsules according to claim 1 to 6, **characterised in that** the lacquers are selected from organic silicon compounds.

8. Use of the doping capsules according to claim 1 to 7, **characterised in that** the elastomers are crosslinked by means of sulphur.

## Revendications

1. Utilisation de capsules de dopage contenant au moins une substance qui présente une phase rotatoire dans une plage de température de 10 à 55 °C et se présente comme phase séparée, la substance étant choisie dans le groupe constitué de
- alcools gras et amines grasses saturés ou insaturés, en particulier alcool dodécylique, alcool décylique, alcool hexadécylique, amine dodécylique, amine décylique ou amine hexadécylique,
- esters d'acides gras et hydrocarbures halogénés, en particulier esters d'acides gras en C 14 à C26, hydrocarbures en C 14 à C26 ou perfluoroalcanes,
- composés de cholestéryle en particulier monohydrate de cholestérol, acétate de cholestéryle ou stigmastérol,
- polyoléfines, en particulier polyéthylène, polypropylène ou leurs copolymères,
- organométaux, en particulier octaméthyl-ferrocènes,
- ainsi que des mélanges de ceux-ci,
pour la protection antisolaire et la réflexion de la chaleur, dans laquelle les capsules conviennent pour une matrice de polymère consistant en thermoplastiques, duromères, élastomères, résines de coulée, laques, hydrogels, polymères inorganiques et mélanges de ceux-ci, présentent un diamètre de plus de λ/4 dans les plages de longueur d'onde UV-VIS, IR proche ou IR, et les capsules
a) sont des microcapsules et présentent un diamètre dans la plage de 1 à 10 µm ;
b) sont des nanocapsules et présentent un diamètre dans la plage de 10 nm à 1 µm ; ou
c) sont constituées d'un mélange de microcapsules d'un diamètre dans la plage de 1 à 10 µm et de nanocapsules d'un diamètre dans la plage de 10 nm à 1 µm ; et
les capsules manifestent une diminution de la transparence à température croissante dans la plage de température.

2. Utilisation des capsules de dopage selon la revendication 1, **caractérisée en ce que** la au moins une substance présente une phase rotatoire dans la plage de température de 15 à 45 °C.

3. Utilisation des capsules de dopage selon l'une quelconque des revendications 1 ou 2, **caractérisée en ce que** la au moins une substance se présente sous une forme monodisperse.

4. Utilisation des capsules de dopage selon l'une quelconque des revendications 1 à 3, **caractérisée en ce que** la capsule contient en plus des substances sans phase rotatoire.

5. Utilisation des capsules de dopage selon l'une quelconque des revendications 1 à 4, **caractérisée en ce que** les thermoplastiques sont choisis dans le groupe constitué des polyoléfines, des polycarbonates, des polyméthacrylates, des polyamides, de leurs mélanges, copolymères et alliages polymères.

6. Utilisation des capsules de dopage selon la revendication 5, **caractérisée en ce que** les duromères sont choisis dans le groupe des résines de mélamine et des résines époxydes.

7. Utilisation des capsules de dopage selon l'une quelconque des revendications 1 à 6, **caractérisée en ce que** les laques sont choisies dans les composés organiques du silicium.

8. Utilisation des capsules de dopage selon l'une quelconque des revendications 1 à 7, **caractérisée en ce que** les élastomères sont réticulés par du soufre.
